# EUROPEAN PATENT APPLICATION

(11) **EP 4 765 236 A1**
(43) Date of publication of application: **24.06.2026**
(21) Application number: 25841375.6
(22) Date of filing: 11.07.2025
(51) Int. Cl.: H01M 4/136, H01M 4/58, H01M 4/62, H01M 10/42, H01M 4/1397, H01M 10/052, H01M 4/02

(54) **POSITIVE ELECTRODE AND SECONDARY BATTERY INCLUDING SAME**

(30) Priority: 15.07.2024 KR 20240093360
(71) Applicant: LG Energy Solution, Ltd., Seoul 07335 (KR)
(72) Inventor: YOO, Houng Sik, Daejeon 34122 (KR); KIM, Dong Hyun, Daejeon 34122 (KR); CHOY, Sang Hoon, Daejeon 34122 (KR); JEON, Shin Wook, Daejeon 34122 (KR); SEOL, Jeong Soo, Daejeon 34122 (KR); LEE, Jong Won, Daejeon 34122 (KR); HAN, Min Seong, Daejeon 34122 (KR); CHOI, Hyun Woo, Daejeon 34122 (KR); SEO, Sang Jin, Daejeon 34122 (KR); KIM, Tae Kyeong, Daejeon 34122 (KR); HWANG, Dong Jun, Daejeon 34122 (KR); LEE, Doo Hyun, Daejeon 34122 (KR); JANG, So Hyeon, Daejeon 34122 (KR); YANG, Gui Eum, Daejeon 34122 (KR)
(74) Representative: Plasseraud IP
(86) International application number: PCT/KR2025/010184
(87) International publication number: WO 2026/019174

(57) **Abstract**

A positive electrode according to the present invention includes a current collector, a positive electrode mixture layer provided on a portion on the current collector and including a positive electrode active material, and an insulation layer adjacent to the positive electrode mixture layer and disposed on the current collector on which the positive electrode mixture layer is not provided, wherein the insulation layer includes a non-aqueous binder containing a solution-polymerized conjugated diene-based copolymer, and inorganic particles, so that it is possible to prevent the occurrence of cracks in a region in which the insulation layer and the positive electrode mixture layer overlap each other, and to solve the problem of electrode detachment and the phenomenon of insulation layer depression.

## Description

### [TECHNICAL FIELD]

The present specification relates to a positive electrode, and a secondary battery including the same, and more specifically, discloses technology related to a positive electrode provided with a non-aqueous binder containing a solution-polymerized conjugated diene-based copolymer, and an insulation layer containing inorganic particles, and a secondary battery including the positive electrode.

### [BACKGROUND ART]

As the technology development and demand for mobile devices have increased in recent years, the demand for secondary batteries as an energy source has been rapidly increased, and accordingly, various studies have been conducted on batteries which may meet various needs. Particularly, studies have been actively conducted on a secondary battery as a power source for such devices, which has high energy density and excellent lifespan and cycle properties.

A secondary battery includes a positive electrode containing a positive electrode active material capable of intercalation/deintercalation of lithium ions, a negative electrode containing a negative electrode active material capable of intercalation/deintercalation of lithium ions, a separator interposed between the positive electrode and the negative electrode, and an electrolyte. The positive electrode and the negative electrode have a structure in which an electrode active material layer is formed on one surface of an electrode current collector or on the positive electrode, and recently, in order to improve the stability of an electrode, technology for forming an insulation layer on an outer periphery of an electrode active material layer is being developed. By forming an insulation layer on the outer periphery of an electrode active material layer, it is possible to protect the electrode active material layer from heat generated when driving an electrode, and to increase insulation between electrodes.

A typical electrode insulation layer is generally formed using a binder having insulation properties. However, since the binder has weak heat resistance, a typical insulation layer composed of the binder has a problem in that adhesion is reduced under high-temperature conditions in accordance with battery driving, and accordingly, the safety of the battery is reduced. In order to solve the above-described problem, there is proposed technology for improving the heat resistance of an insulation layer by adding inorganic particles to a coating composition for electrode insulation.

Even in the case of adding inorganic particles to improve the heat resistance of an insulation layer as described above, a binder should be necessarily included, and typically, insulation coating is performed using a non-aqueous binder (for example, PVDF) that is commonly used. However, an insulation layer formed of a non-aqueous binder has a problem in that when impregnated with an electrolyte solution, adhesion (hereinafter, wet adhesion) is reduced, so that a capacity is expressed due to the failure to block the migration of lithium ions to an overlay region of an electrode.

Accordingly, studies have been conducted on using an aqueous binder such as emulsion-polymerized styrene-butadiene rubber (SBR) as a binder used in an insulation layer of an electrode. In order to form an insulation layer with an aqueous binder, water is used as a solvent in a process of preparing a coating solution. However, in the case of an electrode, particularly a positive electrode, there is a limitation in that an active material component is very susceptible to moisture. Therefore, when water is used as a solvent, it may cause damage to a positive electrode active material layer. Furthermore, when an insulation composition for forming an insulation layer includes an aqueous binder, there is a limitation in that gelation occurs due to a contact with a non-aqueous binder included in an active material slurry.

### [DISCLOSURE OF THE INVENTION]

### [TECHNICAL PROBLEM]

The present specification is to provide a positive electrode in which a solution-polymerized conjugated diene-based copolymer is used as a binder of an insulation layer, so that cracks or a depression phenomenon does not occur in an overlay portion between the insulation layer and a positive electrode mixture layer, and the positive electrode mixture layer is not detached.

In addition, the present specification is to provide a secondary battery including a positive electrode provided with the insulation layer described above, thereby having improved safety since the insulation layer is not detached even in an electrolyte-impregnated environment, which results in preventing a short circuit between electrodes.

### [TECHNICAL SOLUTION]

[1] In an aspect, there is provided a positive electrode including a current collector, a positive electrode mixture layer provided on a portion on the current collector and including a positive electrode active material, and an insulation layer adjacent to the positive electrode mixture layer and disposed on the current collector on which the positive electrode mixture layer is not provided, wherein the insulation layer includes a binder containing a solution-polymerized conjugated diene-based copolymer, and inorganic particles.
[2] In [1] above, the solution-polymerized conjugated diene-based copolymer may include 5 wt% to 95 wt% of a diene-based monomer unit and 5 wt% to 95 wt% of an aromatic vinyl-based monomer unit.
[3] In [1] and/or [2] above, the binder may be surfactant-free.
[4] In any one or more among [1] to [3] above, the insulation layer may include, at a portion in contact with the positive electrode mixture layer, an overlay portion covering a portion on the positive electrode mixture layer.
[5] In any one or more among [1] to [4] above, inorganic particles may include one or more selected from the group consisting of boehmite (AlOOH), aluminum hydroxide (Al(OH)₃), magnesium hydroxide (Mg(OH)₂), alumina (Al₂O₃), and zirconia (ZrO₂).
[6] In any one or more among [1] to [5] above, the positive electrode active material may include a lithium metal phosphate-based compound, wherein the lithium metal phosphate-based compound may be represented by Formula 1 below.

   [Formula 1] Li₁₊ₓ[Fe₁-_{y}M_{y}]PO₄

   In Formula 1 above, M includes one or more selected from the group consisting of Mn, Co, Ni, Al, Mg, and Ti, and -0.5≤x≤0.5, and 0≤y<1.
[7] In any one or more among [1] to [6] above, the insulation layer may include, based on 100 parts by weight of the insulation layer, 40 parts by weight to 95 parts by weight of the inorganic particles and 5 parts by weight to 60 parts by weight of the binder.
[8] In any one or more among [1] to [7] above, the binder may further include an auxiliary binder, wherein the auxiliary binder may include polyvinylidene fluoride.
[9] In any one or more among [1] to [8] above, the solution-polymerized conjugated diene-based copolymer and the auxiliary binder may have a weight ratio of 95:5 to 70:30.
[10] In any one or more among [1] to [9] above, the positive electrode mixture layer may further include a binder and a conductive material.
[11] In an aspect, there is provided a method for manufacturing a positive electrode, the method including (Sla) applying a positive electrode slurry including a positive electrode active material on a portion on a current collector, (S1b) applying an insulation coating composition on the current collector of a region, which is adjacent to a region in which the positive electrode slurry is applied and in which the positive electrode slurry is not applied, and (S2) drying the positive electrode slurry and the insulation coating composition applied on the current collector to form a positive electrode mixture layer and an insulation layer, wherein the insulation coating composition includes a non-aqueous binder containing a solution-polymerized conjugated diene-based copolymer, a non-aqueous organic solvent, and inorganic particles.
[12] In [11] above, the Sla step and the S1b step may be performed prior to the step S2, and may be performed simultaneously or sequentially.
[13] In [11] and/or [12] above, the positive electrode slurry may have a solid content of 50 wt% to 70 wt%, and the insulation coating composition may have a solid content of 10 wt% to 40 wt%.
[14] In an aspect, there is provided a secondary battery including the above-described positive electrode.

### [ADVANTAGEOUS EFFECTS]

A positive electrode disclosed in the present specification may prevent the occurrence of cracks and the phenomenon of depression in a region in which an insulation layer and a positive electrode mixture layer overlap each other.

A method for manufacturing the positive electrode disclosed in the present specification includes a solution-polymerized conjugated diene-based copolymer in an insulation coating composition, and thus may prevent an interaction between a positive electrode slurry and the insulation coating composition when coated on a current collector, and accordingly, may prevent a positive electrode mixture layer from being detached or lifted from a positive electrode after drying in which the insulation layer is formed.

A secondary battery disclosed in the present specification has excellent wet adhesion of the insulation layer, thereby being capable of maintaining adhesion between the current collector and the positive electrode mixture layer even after the impregnation of an electrolyte, and thus, may prevent the problem of detachment. As a result, the secondary battery may improve safety by significantly reducing the possibility of a short circuit between electrodes.

### [BRIEF DESCRIPTION OF THE DRAWINGS]

FIG. 1 is a photograph showing a portion in which a positive electrode mixture layer and an insulation layer of an electrode of Example 1 are adjacent to each other.
FIG. 2 is a photograph showing a cross-section of the portion in which the positive electrode mixture layer and the insulation layer of the electrode of Example 1 are adjacent to each other.
FIG. 3 is a photograph showing a portion in which a positive electrode mixture layer and an insulation layer of an electrode of Comparative Example 1 are adjacent to each other.
FIG. 4 is a photograph showing a cross-section of the portion in which the positive electrode mixture layer and the insulation layer of Example 1 are adjacent to each other.

### [MDOE FOR CARRYING OUT THE INVENTION]

Advantages and features of the invention described herein, and methods for achieving the same will become clear with reference to the following detailed descriptions of examples together with the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout the specification.

Unless otherwise defined, all the terms used herein (including technical and scientific terms) will be used in a sense that can be commonly understood to those of ordinary skill in the art to which the inventive concept pertains. In addition, the terms that are defined in a commonly used dictionary are not interpreted ideally or excessively unless specifically defined.

The terms used herein are for the purpose of describing embodiments and are not intended to be limiting of the inventive concept. In the present specification, singular forms include plural forms unless the context clearly indicates otherwise. As used herein, the terms "comprises" and/or "comprising" are intended to be inclusive of the stated elements, and do not exclude the possibility of the presence or the addition of one or more other elements.

In the present specification, when a portion is said to include a certain element, it means that the portion may further include another element rather than excluding another element unless otherwise stated.

In the present specification, the description of "A and/or B" means A, or B, or A and B.

In the present specification, "%" means wt% unless otherwise noted.

In the present specification, D₅₀ refers to a particle diameter corresponding to 50% of the volume accumulation in a particle diameter distribution curve of particles, and D₉₀ refers to a particle diameter corresponding to 90% of the number accumulation in a particle diameter distribution curve of particles. The D₅₀ and the D₉₀ may be measured by using, for example, a laser diffraction method. The laser diffraction method generally enables measurement of a particle diameter from a sub-micron region to several millimeters, so that results of high reproducibility and high resolution may be obtained.

In the present specification, each of the positive electrode, the method for manufacturing the positive electrode, and a secondary battery including the positive electrode includes one or more of technical features and/or technical configurations to be described below, and the technical features and/or technical configurations may be combined in various ways.

Hereinafter, a positive electrode, a method for manufacturing the positive electrode, and a secondary battery will be described in detail.

### Positive electrode

In an aspect, a positive electrode includes a current collector, a positive electrode mixture layer provided on a portion on the current collector and including a positive electrode active material, and an insulation layer adjacent to the positive electrode mixture layer and disposed on the current collector on which the positive electrode mixture layer is not provided, wherein the positive electrode active material includes a lithium metal phosphate-based compound, and the insulation layer includes a non-aqueous binder containing a solution-polymerized conjugated diene-based copolymer, and inorganic particles.

The positive electrode is characterized by including a lithium metal phosphate-based compound in a positive electrode mixture layer, and including a solution-polymerized conjugated diene-based copolymer as a non-aqueous binder in an insulation layer.

Typically, when a non-aqueous binder is used, there is a problem in that wet adhesion in an electrolyte-impregnated state is poor, so that an aqueous binder has been used, a representative example of which is emulsion-polymerized SBR. The emulsion-polymerized SBR is classified into being aqueous since polymerization is performed using water as a solvent in the presence of an emulsifier and a surfactant, and when an aqueous binder is used in an insulation layer to be coated on an end portion of a positive electrode, the aqueous binder may affect battery performance in various ways since a positive electrode active material is very susceptible to moisture, and may cause a problem of allowing gelation to occur by coming into contact with an oil-based binder of a positive electrode slurry.

Accordingly, a special process is required to use the emulsion-polymerized SBR as a binder of an insulation layer. The above-described problem may be solved by substituting an aqueous solvent of the emulsion-polymerized SBR with a non-aqueous organic solvent, thereby allowing the properties thereof to be identical to those of a solvent component of a positive electrode slurry.

However, the substitution of an aqueous solvent of the emulsion-polymerized SBR with a non-aqueous solvent is pre-treatment that requires a separate process, and performing the above-described pre-treatment for application to an insulation layer, which accounts for a relatively small portion of a battery while being indispensable in the battery, may pose a problem in that the performance can be a major cause of significantly reducing process efficiency, and losing cost competitiveness.

An insulation layer applied to the positive electrode is to solve the above-described problem by applying a solution-polymerized conjugated diene-based copolymer as a binder.

The insulation layer may include, at a portion in contact with the positive electrode mixture layer, an overlay portion covering a portion on the positive electrode mixture layer.

As described above, the overlay portion is a portion in contact with the positive electrode mixture layer, and is the most problematic portion when using an oil-based binder and an aqueous binder, and problems such as easy detachment and cracking frequently occur.

In the case of the emulsion-polymerized SBR, there is no problem in using the same when a positive electrode active material of a positive electrode mixture layer is a lithium nickel-based oxide, but when a lithium metal phosphate-based compound is used as the positive electrode active material, a phenomenon such as collapse of a difference in surface tension between a positive electrode slurry and an insulation composition occurs due to a surfactant inevitably included in the emulsion-polymerized SBR due to the nature of a polymerization reaction, which may result in a phenomenon of lifting or detachment of the mixture layer after drying, leading to a problem in that an insulation layer is destroyed or a portion of the insulation layer is depressed or cracked in the overlay portion.

In an aspect, the positive electrode includes a positive electrode active material including a lithium metal phosphate-based compound in a positive electrode mixture layer, and an insulation layer for insulating the mixture layer includes a solution-polymerized conjugated diene-based copolymer, so that the above-described problem that occurs in an overlay portion may be solved, and since wet adhesion is excellent due to the absence of a surfactant, a problem of detachment may be prevented even in an electrolyte-impregnated state.

The insulation layer may be formed to a predetermined thickness on the current collector and the positive electrode mixture layer. In this case, the thickness of the insulation layer may be 10 µm to 30 µm, preferably 15 µm to 25 µm, and more preferably 17 µm to 23 µm. If the thickness of the insulation layer satisfies the above-described range, the adhesion of the insulation layer with respect to the current collector and/or the positive electrode mixture layer may be further improved.

Hereinafter, each component of the positive electrode will be described.

### (1) Binder containing solution-polymerized conjugated diene-based copolymer

In an aspect, the insulation layer is characterized by including a solution-polymerized conjugated diene-based copolymer as a binder.

The solution-polymerized conjugated diene-based copolymer may be prepared by anionic living polymerization using a diene-based monomer such as butadiene and an aromatic vinyl-based monomer such as styrene in the presence of an initiator and an organic solvent, and in this case, the diene-based monomer and the aromatic vinyl-based monomer may be included in an amount of 5 wt% to 95 wt%, respectively. Specific polymerization conditions, polymerization additives, or the like of the anionic living polymerization are not particularly limited as long as they do not contradict the common technical knowledge known in the art.

The solution-polymerized conjugated diene-based copolymer can have characteristics of being surfactant-free with almost no surfactant. Here, "surfactant-free" means that a surfactant is not detected at a detectable level, and for example, the level may refer to a level of 100 ppm or less, 50 ppm or less, or 30 ppm or less based on the total weight of an insulation layer. Due to the characteristic of being surfactant-free, unlike the emulsion-polymerized SBR, even if a lithium metal phosphate-based compound is applied as a positive electrode active material, it is possible to prevent problems that may occur in an overlay portion, such as detachment of a mixture layer and cracking of an insulation layer, and also, adhesion in an electrolyte-impregnated state may be excellent.

The binder may further include polyvinylidene fluoride (PVDF) in addition to the solution-polymerized conjugated diene-based copolymer. If the polyvinylidene fluoride is further included, stronger adhesion may be imparted.

The insulation layer may include, based on 100 parts by weight of the insulation layer, 5 parts by weight to 60 parts by weight of the binder, preferably 10 parts by weight or greater, 15 parts by weight or greater, 20 parts by weight or greater, or 25 parts by weight or greater, and also 55 parts by weight or less, 50 parts by weight or less, 45 parts by weight or less, or 40 parts by weight or less. If the binder is included in the insulation layer in the above-described range, there may be a synergistic effect of preventing the problems that occur in an overlay portion.

The binder may further include an auxiliary binder, and representative examples thereof may include aqueous or non-aqueous polymers including a single material or a mixture of two or more materials selected from the group consisting of polyvinylidene fluoride (PVdF), polyvinylidene fluoride-hexafluoropropylene, polyvinyl pyrrolidone, polyacrylonitrile, polyvinylidene fluoride-trichlorethylene, polyvinylidene fluoride-chlorotrifluoroethylene (PVdF-CTFE), polymethyl methacrylate, polyvinyl acetate, ethylene-co-vinyl acetate copolymer, polyethylene oxide, cellulose acetate, cellulose acetate butyrate, cellulose acetate propionate, cyanoethylpullulan, cyanoethyl polyvinyl alcohol, cyanoethylcellulose, cyanoethylsucrose, pullulan, carboxymethyl cellulose, styrene butadiene rubber (SBR), acrylonitrile styrene butadiene copolymer, and polyimide. Among these, polyvinylidene fluoride (PVdF) is particularly preferable.

In this case, the solution-polymerized conjugated diene-based copolymer and the auxiliary binder may have a weight ratio of 95:5 to 70:30, preferably 90:10 to 75:25. If the above-described range is satisfied, the above-described effect may be further optimized.

### (2) Inorganic particles

In an aspect, the insulation layer is characterized by including a solution-polymerized conjugated diene-based copolymer as a binder, and also including inorganic particles.

An insulation layer is to serve a purpose of preventing a high-risk event such as thermal runaway or explosion caused by a short circuit between electrodes when a battery operates abnormally, and thus, may be essentially required to have a characteristic of withstanding high temperatures without melting. Accordingly, an insulation layer using only a typical binder has been allowed to include inorganic particles having heat resistance characteristics in an attempt to solve the above-described problem.

Accordingly, the insulation layer provided in the positive electrode also includes inorganic particles, and most importantly, may perform a function to increase heat resistance. Since the inorganic particles do not soften or melt even at a high temperature, for example, at a high temperature of 900 °C or higher, if such inorganic particles are included in the insulation layer, it is possible to maintain electrode insulation even at a very high temperature.

The inorganic particles may include, for example, one or more selected from the group consisting of boehmite (AlOOH), aluminum hydroxide (Al(OH)₃), magnesium hydroxide (Mg(OH)₂), alumina (Al₂O₃), and zirconia (ZrO₂). Preferably, boehmite may be applied, and in this case, dispersibility is excellent while securing better heat resistance, so that there is an advantage in that uniform heat resistance characteristics may be obtained in the entire the insulation layer, and due to the presence of a hydroxyl group contained in the inorganic particles, the ability to maintain adhesion even after electrolyte impregnation may be excellent.

The inorganic particles may have a D₅₀ of 0.1 µm to 5.0 µm, preferably 0.1 µm to 3.0 µm, more preferably 0.3 µm or greater, or 0.5 µm or greater, and also, 2.0 µm or less, or 1.5 µm or less. If the D₅₀ of the inorganic particles satisfies the above-described range, the occurrence of aggregation of the inorganic particles in an insulation coating composition is minimized when forming an insulation layer, so that an insulation layer which is uniform in thickness and surface may be formed.

The insulation layer may include, based on 100 parts by weight of the insulation layer, the inorganic particles in an amount of 40 parts by weight to 95 parts by weight, preferably 45 parts by weight or greater, 50 parts by weight or greater, or 55 parts by weight or greater, and also 90 parts by weight or less, 85 parts by weight or less, 80 parts by weight or less, 75 parts by weight or less, or 70 parts by weight or less. If the content of the inorganic particles satisfies the above-described range, the occurrence of aggregation of the inorganic particles in an insulation coating composition is minimized when forming an insulation layer, so that the viscosity of the composition may be suitably maintained, and an insulation layer which is uniform in thickness and surface may be formed.

### (3) Positive electrode mixture layer

In an aspect, the positive electrode is characterized in that a positive electrode mixture layer is provided on a current collector. In addition, the positive electrode mixture layer includes a lithium metal phosphate-based compound as a positive electrode active material, and may further include a conductive material and a binder.

The current collector is not particularly limited as long as it has conductivity without causing a chemical change in a corresponding battery. For example, as the positive electrode current collector, stainless steel, aluminum, nickel, titanium, fired carbon, or aluminum or stainless steel that is surface-treated with one of carbon, nickel, titanium, silver, and the like may be used.

The thickness of the current collector may be 3 µm to 100 µm, preferably 8 µm to 80 µm, but is not limited thereto. In addition, microscopic irregularities may be formed on the surface of the current collector to improve adhesion of a mixture film.

The positive electrode active material includes a lithium metal phosphate-based compound, which may be represented by Formula 1 below.

[Formula 1] Li₁₊ₓ[Fe_{1-y}M_{y}]PO₄

In Formula 1 above, M includes one or more selected from the group consisting of Mn, Co, Ni, Al, Mg, and Ti, and -0.5≤x≤0.5, and 0≤y<1.

The lithium metal phosphate-based compound may be doped with the M. In this case, the lattice structure and distance in an olivine crystal structure, which is a crystal structure, are changed, so that the diffusivity of lithium ions is increased, and as a result, electrochemical characteristics of a battery including the positive electrode active material may be improved.

The x may be -0.5 to 0.5, preferably -0.3 or greater, -0.1 or greater, or 0 or greater, and 0.5 or less, 0.4 or less, 0.3 or less, 0.2 or less, or 0.1 or less.

The y may be 0 or greater, and may be less than 1, and may be 0.90 or less, 0.80 or less, 0.70 or less, 0.60 or less, 0.50 or less, 0.40 or less, 0.30 or less, 0.20 or less, 0.10 or less, or 0.05 or less.

For example, the lithium metal phosphate-based compound may be, for example, LiFePO₄.

The lithium metal phosphate-based compound according to the present invention may be in the form of a single particle composed of only one primary particle, or in the form of an irregular secondary particle composed of 2 to 50 primary particles. In addition, the lithium metal phosphate-based compound may include an olivine structure, and specifically, may be formed of only the olivine structure. A coating layer according to the present invention may be formed not only on the secondary particle, but also on the primary particle. That is, the coating layer according to the present invention may be uniformly present on the surface of the primary particle present inside the secondary particle.

The coating layer may include a carbon coating layer of a graphite structure, and the coating layer may have a thickness of 0.5 nm to 5 nm. If the thickness of the coating layer is in the above-described range, there is an advantage in that the electrical conductivity is improved, and at the same time, the entry and exit of lithium ions is not interfered. Specifically, the thickness of the coating layer may be 0.5 nm or greater, 1.0 nm or greater, 1.5 nm or greater, 2.0 nm or greater, 2.5 nm or greater, or 3.0 nm or greater, and 5.0 nm or less.

The coating layer may be uniformly coated on the surface of the lithium metal phosphate-based compound. That is, the coating layer may be in the form of a thin film. The coating layer may improve ion conductivity and electronic conductivity during charging and discharging of a battery including a positive electrode active material. The coating layer may include impurities such as nitrogen, oxygen, and hydrogen in a trace amount in addition to carbon.

The coating layer may be included in an amount of 0.5 wt% to 3 wt% based on the total weight of the lithium metal phosphate-based compound so as not to interfere with the entry and exit of lithium ions while improving electrical conductivity.

The positive electrode active material may be included, based on the total weight of the positive electrode mixture layer, in an amount of 80 wt% to 99 wt%, preferably 85 wt% or greater, 88 wt% or greater, 90 wt% or greater, 92 wt% or greater, 93 wt% or greater, or 95 wt% or greater, and also 98.5 wt% or less, 98 wt% or less, or 97.5 wt% or less. If included in the above-described range, it may be preferable both in terms of increasing the capacity and energy density of an electrode, and in terms of optimizing the function of a conductive material and a binder, which are auxiliary materials.

The conductive material is a component for further improving the conductivity of a positive electrode active material, and the conductive material is not particularly limited as long as it has conductivity without causing a chemical change in the battery, and for example, carbon powder such as carbon black, acetylene black, Ketjen black, channel black, furnace black, lamp black, or thermal black; graphite powder such as natural graphite, artificial graphite, or graphite with a highly developed crystal structure, conductive fiber such as carbon fiber or metal fiber; fluorocarbon powder; conductive powder such as aluminum powder or nickel powder; conductive whisker such as zinc oxide or potassium titanate; conductive metal oxide such as titanium oxide; a conductive material such as polyphenylene derivative, or the like may be used. Specifically, for uniform mixing and improvement in conductivity of the conductive material, one or more selected from the group consisting of activated carbon, graphite, carbon black, and carbon nanotube (CNT) may be included.

The conductive material may be included in an amount of 0.1 wt% to 10.0 wt% based on the total weight of the positive electrode mixture layer. Preferably, the conductive material may be included in an amount of 0.2 wt% or greater, 0.3 wt% or greater, 0.5 wt% or greater, or 0.7 wt% or greater, and also 8.0 wt% or less, 6.0 wt% or less, or 5.0 wt% or less. The larger the amount of the conductive material to be input, the more advantageous it is for forming a conductive path, but the capacity may be degraded due to a relative decrease in the amount of the active material, and although it is not easy to control the input amount due to a dispersion problem, it is possible to maximize the effect of forming a conductive path by optimizing the dispersibility in the above-described range, so that it may be preferable that the conductive material is applied in the aforementioned range.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, a poly acrylic acid, a polymer having the hydrogen thereof substituted with Li, Na, or Ca, or various copolymers thereof, and any one thereof or a mixture of two or more thereof may be used.

The binder may be included in an amount of 0.1 wt% to 10.0 wt% based on the total weight of the positive electrode mixture layer. Preferably, the binder may be included in an amount of 0.2 wt% or greater, 0.3 wt% or greater, 0.5 wt% or greater, or 0.7 wt% or greater, and also 8.0 wt% or less, 6.0 wt% or less, or 5.0 wt% or less.

### Method for manufacturing positive electrode

In an aspect, a method for manufacturing the positive electrode includes (Sla) applying a positive electrode slurry including a positive electrode active material on a portion on a current collector, (S1b) applying an insulation coating composition on the current collector of a region, which is adjacent to a region in which the positive electrode slurry is applied and in which the positive electrode slurry is not applied, and (S2) drying the positive electrode slurry and the insulation coating composition applied on the current collector to form a positive electrode mixture layer and an insulation layer, wherein the positive electrode active material includes a lithium metal phosphate-based compound, and the insulation coating composition includes a binder containing a solution-polymerized conjugated diene-based copolymer, an organic solvent, and inorganic particles.

The Sla step above may be performed according to a typical method for manufacturing a positive electrode. Specifically, a positive electrode slurry prepared by dissolving or dispersing a positive electrode active material, a binder, and a conductive material in a solvent may be applied on a positive electrode current collector, dried, and then roll-pressed to manufacture the positive electrode.

The S1b step above may also be performed according to a typical method for preparing an insulation layer. For example, the insulation coating composition may be prepared by mixing inorganic particles and a binder in an organic solvent and performing a dispersion process. Specifically, the particles are added to an organic solvent and mixed to mix each component of the composition. In this case, the mixing may be performed using mixing devices well known in the art, for example, a homo mixer or the like, but is not limited thereto.

The composition that has undergone the above-described mixing process is dispersed by milling. The milling may be performed using a ball mill, a bead mill, or a basket mill, and more specifically, may be performed using a bead mill. Meanwhile, the degree of dispersion of the composition may be controlled by adjusting milling conditions such as the number of times the composition is passed through the ball mill, the bead mill, or the basket mill (hereinafter, "Pass count") and the rotor speed.

The Sla and S1b steps above may be simultaneously performed, or may be sequentially performed before a drying process of the S2 step is performed. Specifically, a coater having a plurality of nozzles may be used such that a positive electrode slurry and an insulation coating composition may be simultaneously applied on a current collector, and positive electrode slurry coating equipment and insulation coating composition coating equipment may be sequentially arranged in the travel direction of a conveyor to design a process such that coating is all performed before drying.

The S2 step is a drying process to which conditions commonly applied in the art may be applied, and for example, drying may be performed at a temperature of 120 °C to 170 °C, preferably 130 °C to 160 °C. The above-described temperature range is more severe than that in a general drying process, and if a lithium metal phosphate-based compound is used as a positive electrode active material, it is necessary to perform a drying process under slightly severe conditions since the content of solids included in a slurry having an equivalent level of viscosity is lower than that of a slurry to which a different positive electrode active material is applied, so that the content of a solvent to be removed is high. In this case, after the drying process, there may be a problem in that the positive electrode mixture layer or the insulation layer is detached, cracked or depressed, which may easily occur in an overlay portion in particular, but if an insulation layer according to an embodiment of the present invention is applied, such a problem may be prevented.

Meanwhile, according to an embodiment of the present invention, the positive electrode slurry may have a solid content of 50 wt% to 70 wt%, preferably 55 wt% to 65 wt%, and the insulation coating composition may have a solid content of 10 wt% to 40 wt%, preferably 10 wt% to 35 wt%. If the solid content is controlled within the above-described range, the positive electrode slurry and the insulation coating composition may not be mixed, and a problem in that the insulation coating composition penetrates into the interface between the positive electrode mixture layer and the current collector may not occur.

### (1) Organic solvent

In an aspect, the insulation coating composition may be a mixture of inorganic particles and a binder in the presence of an organic solvent, and the positive electrode slurry may also be a mixture of a positive electrode active material, a conductive material, and a binder in the presence of an organic solvent, wherein the organic solvent of the insulation coating composition and the organic solvent of the positive electrode slurry may be the same as or different from each other, and the application thereof is not particularly limited as long as they are applied as non-aqueous organic solvents.

The organic solvent may be a solvent commonly used in the art, and for example, may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the organic solvent to be used is sufficient if the solvent can dissolve or disperse the constituent component particles in consideration of the coating thickness of the positive electrode slurry and the insulation coating composition, and preparation yields, and thereafter, allow for a viscosity capable of exhibiting excellent thickness uniformity.

### (2) Dispersant

In an aspect, the insulation coating composition may further include a dispersant. The dispersant is to improve the dispersibility of particles not dissolved in each of the compositions.

The dispersant may be exemplified by a cellulose-based compound, and non-limiting examples thereof may include carboxyl methyl cellulose, carboxyl ethyl cellulose, or a derivative thereof, for example, a cation-substituted compound such as ammonium ions thereof, or monovalent metal ions thereof.

### Secondary battery

In an aspect, a secondary battery includes a positive electrode, a negative electrode positioned to face the positive electrode, and a separator interposed between the positive electrode and the negative electrode, and after being accommodated in a battery case, may include an electrolyte injected thereto. Here, since the positive electrode is same as described above, a detailed description thereof will be omitted, and hereinafter, only the rest of the components will be described in detail.

The secondary battery may selectively further include a battery case for accommodating an electrode assembly of the positive electrode, the negative electrode, and the separator, and a sealing member for sealing the battery case.

In the secondary battery, the negative electrode includes a negative electrode current collector and a negative electrode mixture layer positioned on the negative electrode current collector.

The negative electrode current collector is not particularly limited as long as it has high conductivity without causing a chemical change in a battery, and for example, copper, stainless steel, aluminum, nickel, titanium, heat-treated carbon, copper or stainless steel that is surface-treated with one of carbon, nickel, titanium, silver, and the like, an aluminum-cadmium alloy, and the like may be used. Also, the negative electrode current collector may typically have a thickness of 3 µm to 500 µm, and as in the case of the positive electrode current collector, microscopic irregularities may be formed on the surface of the negative electrode current collector to improve the binding force of the negative electrode active material. For example, the negative electrode current collector may be used in various forms such as a film, a sheet, a foil, a net, a porous body, a foam, and a non-woven body.

The negative electrode mixture layer selectively includes a binder and a conductive material together with a negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, or amorphous carbon; a metallic compound alloyable with lithium such as Si, Al, Sn, Pb, Zn, Bi, In, Mg, Ga, Cd, an Si alloy, an Sn alloy, or an Al alloy; a metal oxide capable of doping and undoping lithium such as SiO_{β} (0 < β < 2), SnO₂, a vanadium oxide, or a lithium vanadium oxide; or a composite including the metallic compound and the carbonaceous material such as an Si-C composite or an Sn-C composite, and any one thereof or a mixture of two or more thereof may be used. In addition, a metal lithium thin film may be used as the negative electrode active material. Also, low crystalline carbon, high crystalline carbon, and the like may all be used as a carbon material. Representative examples of the low crystalline carbon may include soft carbon and hard carbon, and representative examples of the high crystalline carbon may include irregular, planar, flaky, spherical, or fibrous natural graphite or artificial graphite, Kish graphite, pyrolytic carbon, mesophase pitch-based carbon fiber, meso-carbon microbeads, mesophase pitches, and high-temperature heat-treated carbon such as petroleum or coal tar pitch derived cokes.

The negative electrode active material may be included in an amount of 80 wt% to 99 wt% based on the total weight of a negative electrode active material layer.

The binder is a component for assisting in binding between a conductive material, an active material, and a current collector, and is typically added in an amount of 0.1 wt% to 10 wt% based on the total weight of the negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, styrene-butadiene rubber, nitrile-butadiene rubber, fluorine rubber, various copolymers thereof, and the like.

The conductive material is a component for further improving the conductivity of the negative electrode active material, and may be added in an amount of 10 wt% or less, preferably 5 wt% or less, based on the total weight of the negative electrode mixture layer. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; conductive fiber such as carbon fiber and metal fiber; fluorinated carbon; metal powder such as aluminum powder and nickel powder; a conductive whisker such as zinc oxide and potassium titanate; a conductive metal oxide such as titanium oxide; and a conductive material such as a polyphenylene derivative, or the like may be used.

The negative electrode mixture layer may be prepared by applying a negative electrode slurry composition, which is prepared by dissolving or dispersing a negative electrode active material and selectively, a binder and a conductive material in a solvent, on a negative electrode current collector, followed by drying, or may be prepared by casting the negative electrode slurry composition on a separate support, and then laminating a film peeled off from the support on a negative electrode current collector.

In the secondary battery, the separator is to separate the negative electrode and the positive electrode and to provide a migration path for lithium ions, and any separator may be used without particular limitation as long as it is a separator commonly used in a secondary battery, and particularly, a separator having low resistance to ion migration in an electrolyte and excellent moisture retention capability for an electrolyte solution is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, or an ethylene/methacrylate copolymer, or a stacked structural body having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may selectively be used in a single-layered or multi-layered structure.

The electrolyte used in the secondary battery may be an organic liquid electrolyte, an inorganic liquid electrolyte, a solid polymer electrolyte, a gel-type polymer electrolyte, a solid inorganic electrolyte, a molten-type inorganic electrolyte, or the like, all of which may be used in the manufacturing of a secondary battery, but is not limited thereto.

The electrolyte may include an organic solvent and a lithium salt.

As the organic solvent, any organic solvent may be used without particular limitation as long as it can serve as a medium through which ions involved in an electrochemical reaction of a battery may migrate. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

Any compound may be used as the lithium salt without particular limitation as long as it is a compound capable of providing lithium ions used in a secondary battery. Specifically, anions of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. It is preferable that the lithium salt is used in a concentration range of 0.1 M to 2.0 M. If the concentration of the lithium salt is included in the above-described range, the electrolyte has suitable conductivity and viscosity, and thus, may exhibit excellent electrolyte performance, and lithium ions may effectively migrate.

In order to improve lifespan properties of a battery, suppress a decrease in battery capacity, improve discharge capacity of the battery, and the like, the electrolyte may further include one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like. At this time, the additive may be included in an amount of 0.1 wt% to 5 wt% based on the total weight of the electrolyte.

In another aspect, the secondary battery may be an all-solid-state battery, and in this case, a solid electrolyte layer may be interposed between the positive electrode and the negative electrode instead of a separator. Any solid electrolyte commonly used in the art may be applied as the solid electrolyte, and is not particularly limited.

Hereinafter, the present invention will be described in more detail with reference to examples. However, the following examples are merely illustrative of the present invention and are not intended to limit the scope of the present invention.

### Preparation of insulation coating composition

### Preparation Example 1

60 parts by weight of boehmite (product name: BP10, manufacturer: KEATON) having a D₅₀ of 1.0 µm and a specific surface area of about 5.0 m²/g to 8.5 m²/g, and 35 parts by weight of a solution-polymerized SBR (a linear copolymer solution-polymerized with 40 parts by weight of styrene and 60 parts by weight of butadiene, a weight average molecular weight of 250,000) and 5 parts by weight of PVDF (product name: KF9700, manufacturer: KUREHA), as a binder, were mixed in a non-aqueous organic solvent of NMP to prepare 1 kg of a mixture, and then mixing was performed thereon for 1 hour using a homo mixer (product name: Dispermat LC, manufacturer: VMA).

Next, using a bead mill (product name: LS-1, manufacturer: NETZSCH), a dispersion process was performed at a rotor speed of 3300 RPM, a 1-pass discharge amount of 540 g/min, and a pass count of 8 to prepare an insulation coating composition.

### Preparation Example 2

An insulation coating composition was prepared in the same manner as in Preparation Example 1, except that 65 parts by weight of boehmite was added, and PVDF was not added in the binder.

### Preparation Example 3

An insulation coating composition was prepared in the same manner as in Preparation Example 1, except that 65 parts by weight of boehmite was added, and 30 parts by weight of solution-polymerized SBR was added in the binder.

### Preparation Example 4

An insulation coating composition was prepared in the same manner as in Preparation Example 1, except that 70 parts by weight of boehmite was added, 30 parts by weight of solution-polymerized SBR was added in the binder, and PVDF was not added therein.

### Comparative Preparation Example 1

With respect to 100 parts by weight of a dispersion in which emulsion-polymerized SBR (hereinafter, BM451B, a product of ZEON company) was dispersed in water at a weight ratio of 60:40, 500 parts by weight of an N-methyl-2-pyrrolidone (NMP) solvent was added and stirred. Then, the stirred mixture was heated under the condition of 100 °C to 120 °C for 2 hours to completely evaporate the contained water, thereby preparing an NMP-substituted emulsion-polymerized SBR binder. Then, an insulation coating composition was prepared in the same manner as in Preparation Example 1 by using the NMP-substituted SBR binder instead of the solution-polymerized SBR.

### Comparative Preparation Example 2

An insulation coating composition was prepared in the same manner as in Preparation Example 2, except that 35 parts by weight of PVDF was added instead of the solution-polymerized SBR in the binder.

The weight average molecular weight of the used binder polymer is a value obtained by converting a value measured under the following conditions by using gel permeation chromatography (GPC) with respect to standard polystyrene, and standard polystyrene of an Agilent system was used to manufacture a calibration curve.

### <Measurement conditions>

Measuring device: Agilent GPC (Agilent 1,200 series)
Column: Two PL Mixed B connections
Column temperature: 40 °C
Eluent: Tetrahydrofuran
Flow rate: 1.0 mL/min
Concentration: ~ 1 mg/mL (100 µL injection)

### Manufacturing of positive electrode

### Examples 1 to 4

96 parts by weight of LiFePO₄ as a positive electrode active material, 2 parts by weight of PVDF as a binder, and 2 parts by weight of carbon black as a conductive material were weighed and mixed in an N-methylpyrrolidone (NMP) solvent to prepare a positive electrode slurry. In addition, the positive electrode slurry and each of the insulation coating compositions prepared in Preparation Examples 1 to 4 were simultaneously applied on a current collector by using a double-slot die coater, wherein the positive electrode mixture layer had a loading amount of 20 mg/cm², and the insulation layer had an average thickness of 20 µm. Then, each electrode sample was dried at an average temperature of 130 °C to manufacture a positive electrode.

### Comparative Example 1

A positive electrode was manufactured in the same manner as in Example 1, except that the insulation coating composition of Comparative Preparation Example 1 was applied as an insulation coating composition.

### Comparative Example 2

A positive electrode was manufactured in the same manner as in Example 1, except that the insulation coating composition of Comparative Preparation Example 2 was applied as an insulation coating composition.

**[Table 1]**

| | Positive electrode active material | Boehmite (Parts by weight) | Binder | |
|---|---|---|---|---|
| | | | Type | Content |
| Example 1 | LFP | 60 | SSBR+PVDF | 35+5 |
| Example 2 | LFP | 65 | SSBR | 35 |
| Example 3 | LFP | 65 | SSBR+PVDF | 30+5 |
| Example 4 | LFP | 70 | SSBR | 30 |
| Comparative Example 1 | LFP | 60 | ESBR (solvent substitution ) +PVDF | 35+5 |
| Comparative Example 2 | LFP | 65 | PVDF | 35 |

### Experimental Example 1: Appearance evaluation

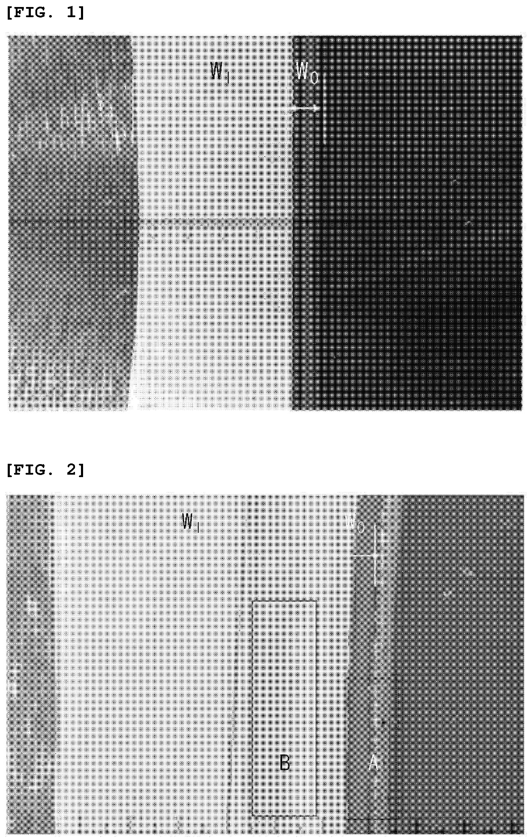

A surface portion of an insulation layer of each of the positive electrodes of Examples 1 to 4 and Comparative Examples 1 and 2 was photographed to confirm whether there was a crack or a depression portion, and a cross-sectional photograph of each of the positive electrodes was used to confirm whether there was detachment/lifting of a positive electrode mixture layer, and each of the positive electrodes was impregnated with an electrolyte (an organic solvent of EC:DMC=55:45, 1 M of LiPF₆) and then stored in an oven at 60 °C for 1 week to confirm whether the insulation layer was detached, wherein the photographs of the surface of the insulation layer and the cross-section of each of the positive electrodes of Example 1 and Comparative Example 1 are attached as FIGS. 1 to 4.

**[Table 2]**

| | Cracks in overlay portion | Presence or absence of depressi ons | Presence or absence of mixture layer lifting | Presence or absence of electrol yte solution wetting and desorpti on |
|---|---|---|---|---|
| Example 1 | X | X | X | X |
| Example 2 | X | X | X | X |
| Example 3 | X | X | X | X |
| Example 4 | X | X | X | X |
| Comparative Example 1 | O | O | O | X |
| Comparative Example 2 | X | X | X | O |

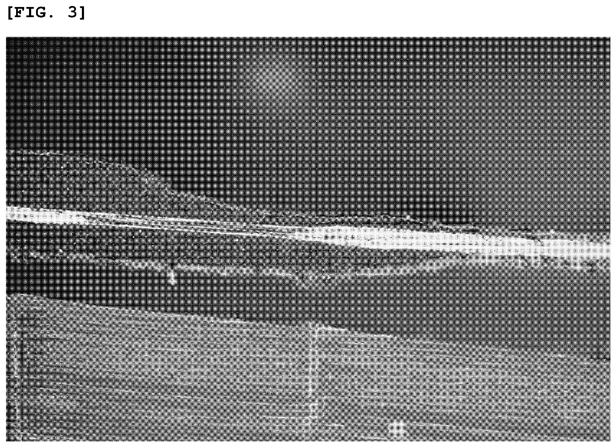

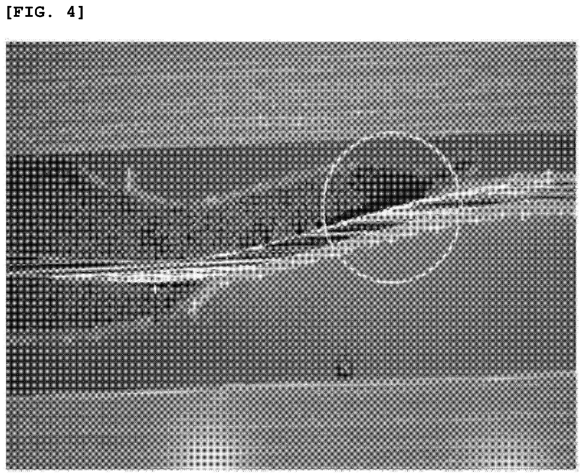

First, referring to FIGS. 1 and 2, which are respectively the photographs of the surfaces of the insulation layers of Example 1 and Comparative Example 1, W_{I} represents an insulation width and W_{O} represents an overlay width, as denoted in the drawings. Unlike FIG. 1, in FIG. 2, it can be confirmed that portion B is depressed, and it can be confirmed that there are cracks as in portion A. In addition, referring to FIGS. 3 and 4, it is confirmed that the positive electrode mixture layer and the insulation layer are well bonded on the current collector in the photograph of FIG. 3, which shows the cross-section of Example 1, but it is confirmed that a portion of the positive electrode mixture layer is detached and lifted from the current collector in the cross-section of the positive electrode of Comparative Example 1 of FIG. 4.

In addition, referring to Table 1 above, it was also confirmed that in the cases of Examples 2 to 4, no lifting, detachment, or cracking occurred on the surface or the cross-section as in Example 1. In addition, in the case of Comparative Example 2, it was confirmed that detachment occurred after electrolyte solution wetting due to the fact that the binder PVDF used had a property of being easily wetted by an electrolyte solution.

## Claims

1. A positive electrode comprising:
a current collector; a positive electrode mixture layer provided on a portion on the current collector and including a positive electrode active material; and an insulation layer adjacent to the positive electrode mixture layer and disposed on the current collector on which the positive electrode mixture layer is not provided,
wherein the insulation layer includes a binder containing a solution-polymerized conjugated diene-based copolymer, and inorganic particles.

2. The positive electrode of claim 1, wherein the solution-polymerized conjugated diene-based copolymer comprises 5 wt% to 95 wt% of a diene-based monomer unit and 5 wt% to 95 wt% of an aromatic vinyl-based monomer unit.

3. The positive electrode of claim 1, wherein the binder is surfactant-free.

4. The positive electrode of claim 1, wherein the insulation layer comprises, at a portion in contact with the positive electrode mixture layer, an overlay portion covering a portion on the positive electrode mixture layer.

5. The positive electrode of claim 1, wherein inorganic particles comprise one or more selected from the group consisting of boehmite (AlOOH), aluminum hydroxide (Al(OH)₃), magnesium hydroxide (Mg(OH)₂), alumina (Al₂O₃), and zirconia (ZrO₂).

6. The positive electrode of claim 1, wherein the positive electrode active material comprises a lithium metal phosphate-based compound, wherein the lithium metal phosphate-based compound is represented by Formula 1 below:
[Formula 1] Li₁₊ₓ[Fe_{1-y}M_{y}]PO₄
wherein in Formula 1 above, M includes one or more selected from the group consisting of Mn, Co, Ni, Al, Mg, and Ti, and -0.5≤x≤0.5, and 0≤y<1.

7. The positive electrode of claim 1, wherein the insulation layer comprises, based on 100 parts by weight of the insulation layer, 40 parts by weight to 90 parts by weight of the inorganic particles and 10 parts by weight to 60 parts by weight of the binder.

8. The positive electrode of claim 1, wherein the binder further comprises an auxiliary binder, wherein the auxiliary binder includes polyvinylidene fluoride.

9. The positive electrode of claim 8, wherein the solution-polymerized conjugated diene-based copolymer and the auxiliary binder have a weight ratio of 95:5 to 70:30.

10. The positive electrode of claim 1, wherein the positive electrode mixture layer further comprises a binder and a conductive material.

11. A method for manufacturing a positive electrode, the method comprising the steps of:
(Sla) applying a positive electrode slurry including a positive electrode active material on a portion on a current collector;
(S1b) applying an insulation coating composition on the current collector of a region, which is adjacent to a region in which the positive electrode slurry is applied and in which the positive electrode slurry is not applied; and
(S2) drying the positive electrode slurry and the insulation coating composition applied on the current collector to form a positive electrode mixture layer and an insulation layer,
wherein the insulation coating composition includes a binder containing a solution-polymerized conjugated diene-based copolymer, an organic solvent, and inorganic particles.

12. The method of claim 11, wherein the Sla step and the S1b step are performed prior to the step S2, and are performed simultaneously or sequentially.

13. The method of claim 11, wherein:
the positive electrode slurry has a solid content of 50 wt% to 70 wt%; and
the insulation coating composition has a solid content of 10 wt% to 40 wt%.

14. A secondary battery comprising the positive electrode as set forth in claim 1.
